# EUROPEAN PATENT APPLICATION

(11) **EP 3 016 017 A1**
(43) Date of publication of application: **04.05.2016**
(21) Application number: 14306701.5
(22) Date of filing: 27.10.2014
(51) Int. Cl.: G06F 21/64, H04L 29/06

(54) **Device comprising a sensor or an actuator protected by a secure element**

(71) Applicant: GEMALTO SA, 92190 Meudon (FR)
(72) Inventor: Girard, Pierre, 13881 GEMENOS CEDEX (FR); Muller, Marc, 13881 GEMENOS CEDEX (FR)

(57) **Abstract**

The invention relates to a device comprising a controller, a secure element and a sensor/actuator. The controller is able to communicate with the secure element and with an external device. The secure element has a physical Input/Output interface configured to handle the sensor/actuator and is directly connected to the sensor/actuator through a wired link configured so that the controller can access the sensor/actuator only through the secure element.

## Description

### (Field of the invention)

The present invention relates to devices comprising at least a component of sensor or actuator type. It relates particularly to devices wherein access to said component is protected by a secure element.

### (Background of the invention)

A secure element is a tamper-resistant physical component able to store data and to provide services in a secure manner. A secure element comprises memory and computing resources and an operating system configured to deny access to its resources to an entity which is not entitled. A secure element is highly resistant to code injection attack. In general, a secure element has a limited amount of memory, a processor with limited capabilities and is devoid of battery. For instance a smart card is a secure element. A secure element can be installed, fixedly or not, in a device. In some cases, the devices are constituted by machines that communicate with other machines for M2M (Machine to Machine) applications.

A secure element can be in the format of a smart card, or may be in any other format such as for example but not limited to a packaged chip as described in PCT/SE2008/050380, or any other format.

It is known to solder or weld a secure element in a host device, in order to get it dependent of this host device. This is done in M2M (Machine to Machine) domain. The secure element can be for example soldered to the mother-board of the host device or machine and constitutes a so-called embedded-secure element (eSE).

In the state of the art, a device comprising a sensor or an actuator also comprises a microcontroller in charge of both the communication with external equipments and the access to the sensor or actuator.

It is known to add a secure element in the device so that the microcontroller can delegate the access control to the secure element. In this case, the microcontroller gets the result of the access control checking carried out by the secure element and access or not the sensor or the actuator according to the result provided by the secure element.

Unfortunately, a security breach still exists because the microcontroller can be hacked and a malicious code may be injected in the microcontroller for bypassing the result provided by the secure element.

There is a need to increase the security level in a device when accessing its sensor or actuator.

### (Summary of the Invention)

An object of the invention is to solve the above mentioned technical problem.
The object of the present invention is a device a device comprising a controller, a secure element and a component selected from a set including sensors and actuators. The secure element includes resources and an operating system configured to deny access to said resources to an entity which is not entitled. The controller is able to communicate with the secure element and with an external device. The secure element has a physical Input/Output interface configured to handle the component. The secure element is directly connected to the component through a wired link configured so that the controller can access the component only through the secure element.

Advantageously, the wired link may be a bus.

Advantageously, the wired link may be a point-to-point connection.

Advantageously, the component may be a smart sensor.

Advantageously, the component may be an actuator adapted to activate and to block a service.

Another object of the present invention is a method for transmitting a message to a component selected from a set including sensors and actuators. The component is included in a device comprising a controller and a secure element which includes both resources and an operating system configured to deny access to said resources to an entity which is not entitled. The controller is able to communicate with the secure element and to receive a request to send the message to the component. The request is initiated by an external device. The method comprises the following steps:
- the controller forwards the request to the secure element,
- the secure element checks the genuineness of the request,
- the secure element sends the message directly to the component in case of successful checking only.

Advantageously, the step of checking the genuineness of the request may include authentication of the external device and checking of integrity of the request.

Advantageously, the component may be an actuator and the message may be a command.

Advantageously, the component may be a sensor and the message may be a request to retrieve a value provided by the sensor.

Advantageously, the value may be securely sent to the external device via the controller using a security layer provided by the secure element.

### (Brief description of the drawings)

Other characteristics and advantages of the present invention will emerge more clearly from a reading of the following description of a number of preferred embodiments of the invention with reference to the corresponding accompanying drawings in which:
- Figure 1 is an example of an architecture of a device comprising a sensor, a controller and a secure element according to the prior art,
- Figure 2 is an example of an architecture of a device comprising a sensor, a controller and a secure element according to the invention, and
- Figure 3 is an example of a sequence of data exchange when controlling the access to the actuator of a device according to the invention.

### (Detailed description of the preferred embodiments)

The invention may apply to any types of device comprising at least one sensor or one actuator. For example the device may be a M2M box, an electricity/gas/water meter, a home automation detector or any computer equipped with at least a sensor or an actuator. The device may comprise any types of actuator and any types of sensor. In particular, the device may comprise a basic sensor or a smart sensor. A smart sensor is a component which includes both at least a sensing element as well as a processing element able to perform a first level of treatment on the measures captured by the sensing element.

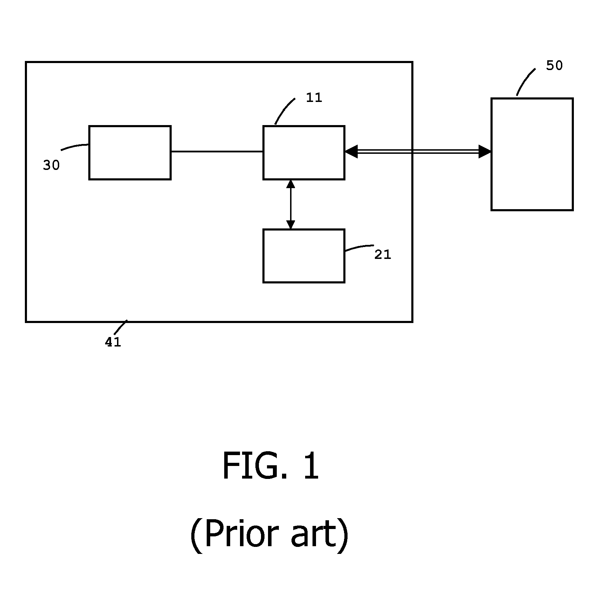

**Figure 1** shows an example of architecture of a device comprising a sensor, a controller and a secure element according to the prior art.

In this example, the device 41 is a meter which comprises a sensor 30 able to measure the power consumption. The device 41 comprises a controller 11 able to handle access to the sensor 30 and to manage communication with an external device 50. The device 41 also comprises a secure element 21 able to check if the access to the sensor is authorized. The authorization checking usually involves the combination of the authentication of the external device 50 (i.e. the requestor), the checking of its access rights and the checking of the integrity of the request sent by the external device 50.

The controller 11 is configured to get a request for sensor 30 access from the external device 50, to delegate the request authentication to the secure element 21 and to trigger (or not) access to the sensor 30 according to the result of the authentication checking performed by the secure element 21.

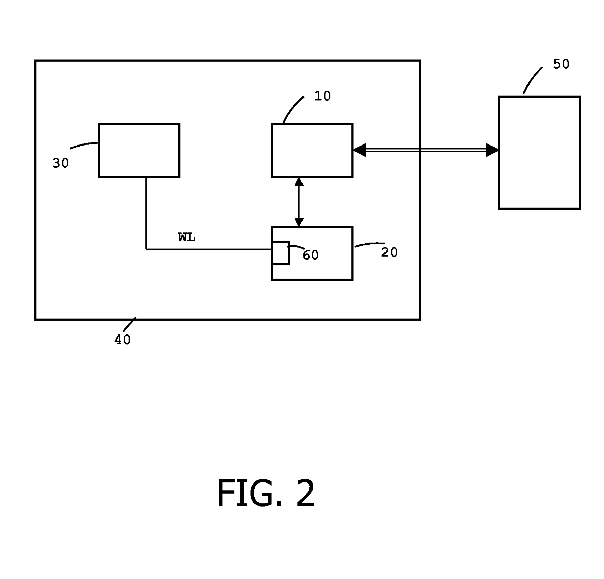

**Figure 2** shows an example of architecture of a device comprising a sensor, a controller and a secure element according to the invention.

In this example, the device 40 is a meter which comprises a sensor 30 able to measure the power consumption. The device 40 comprises a controller 10 able to manage communication with an external device 50. The device 40 also comprises a secure element 20 able to check if the access to the sensor is authorized.

The authorization checking is similar to that described at Figure 1. In particular, authentication of the external device 50 can be checked and access rights granted to the external device 50 can be checked. In addition, incoming data (e.g. control command for actuators or read command for sensors) and outgoing data (e.g. value coming from a sensor) can be protected in integrity and confidentiality thanks to the secure element 20. In other words, the secure element 20 provides a security layer allowing securely communicating with the external device 50.

Integrity and confidentiality can be obtained by using well known security mechanisms like signature/MAC. Access control and authentication of the requestor can be obtained using a signature or any relevant cryptographic protocol.

The secure element 20 is directly linked to the sensor 30 through a wired link WL while the controller 10 has no direct link to the sensor 30. The secure element 20 has a physical Input/Output interface 60 configured to handle the sensor 30. The controller 10 can access the sensor 30 only through the secure element 20.

The controller 10 is configured to get a request for sensor 30 access from the external device 50 and to send this request to the secure element 20. The secure element 20 is adapted to check the genuineness of the request, to identify a message MG corresponding to the request and to trigger (or not) access to the sensor 30 according to the result of the genuineness checking by sending the message MG to the sensor 30. Usually, the message MG is a request to get a value (or a set of values) measured by the sensor 30.

As in prior art scheme, the secure element 20 is assumed to have capability to authenticate a request (originated from the external device 50) aiming at accessing a sensor/actuator. Such an authentication operation can be implemented via security mechanisms well-known in secure element and smart card domains. For instance, the authentication may be carried out by checking a signature embedded in the request.

Advantageously, anti-replay mechanisms (usually based on a monotonic counter) may be implemented to enhance the security of the request.

In addition, the secure element 20 is configured to identify the message MG from the received request. For example, the message MG may be encapsulated in the request or the request may comprise an identifier of the relevant message MG to be sent.

In the same way, the secure element 20 is adapted to retrieve the measured value from the sensor 30 and to send this measured value to the controller 10 which in turn sends the measured value to the external device 50.

The external device 50 may be a back-end server, a remote machine, a portable device or any computer able to send a genuine request to the device 40.

The physical Input/Output interface 60 may be implemented through a synchronous serial data link like the Serial Peripheral Interface (SPI) interface. The I/O interface 60 may also be implemented through the Single Wire Protocol (SWP) specified originally for the connection between a UICC and a NFC controller. Any other relevant communication protocol complying with the hardware constraints of the used sensor and secure element may apply.

Advantageously, the wired link WL may be implemented thanks to a bus topology allowing connecting the secure element 20 with several sensors/actuators.

Alternatively, the wired link WL may be implemented as a single wire providing (by design) a point-to-point connection between the sensor 30 and the secure element 20. In this case, the secure element 20 can be connected to multiple sensors/actuators by many individual wired links.

An advantage of the invention is to avoid fraudulent access to a sensor (or to an actuator) even if the controller has been hacked. The secure element will detect that the request sent by the controller is not genuine and prevent access to the sensor/actuator.

It should be noted that the device 40 may contain any combination of sensors and actuators.

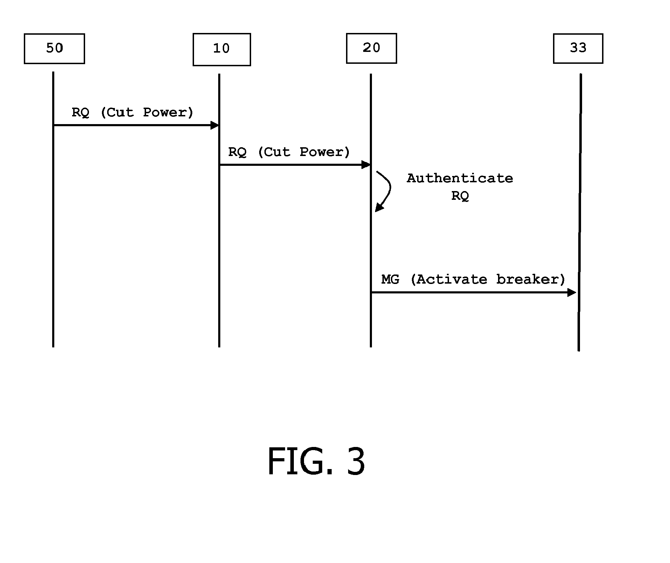

**Figure 3** shows an example of sequence of data exchange when controlling the access to the actuator of a device according to the invention.

In this example, the device according to the invention is a meter which comprises an actuator 33 able to cut a power line.

At a first step, the external device 50 sends a request RQ aiming at triggering the cut of the power line by the actuator 33. The controller 10 receives the request RQ then forwards the request RQ to the secure element 20 at a second step.

At a third step, the secure element 20 checks the genuineness of the request RQ. In case of success, the secure element 20 sends a message MG requesting the activation of the power breaker to the actuator 33 at a fourth step. In this case, the message MG is a command targeting the actuator 33. In case of unsuccessful checking of the genuineness, the secure element does not send the message MG to the actuator and may take any actions relevant in case of attack detection.

Actuators are well known in Machine-to-Machine domain. An actuator can be defined as a component able to perform actions on the physical world. An actuator can act on the flow of a gas or liquid, on the electricity distribution, through a mechanical operation for instance. Thus an actuator allows activating or blocking a service. An actuator may control a door lock or a door lock release mechanism in response to a control command. Dimmers and relays are examples of actuators.

Thanks to the invention, a service may be securely activated or blocked via an actuator in response to a request sent by a remote device. For example, the invention allows to securely switching on/off the light in a building or a broad area like an airport.

The invention applies to the control of any type of sensors, including the smart sensors.

It must be understood, within the scope of the invention, that the above-described embodiments are provided as non-limitative examples. In particular, the secure element may handle any number of sensors and actuators. The device 40 may be any device comprising at least one sensor/actuator. In particular, the device 40 may be used in industrial automation, automotive, mobile health, home automation and any M2M domains.

The architecture of the device shown at Figure 2 is provided as example only. This architecture may be different provided that there is no programmable component able to access directly the sensors/actuators, except the secure element.

## Claims

1. A **device** (40) comprising a controller (10), a secure element (20) and a component (30) selected from a set including sensors and actuators, the secure element (20) including resources and an operating system configured to deny access to said resources to an entity which is not entitled, said controller (10) being able to communicate with the secure element (20) and with an external device (50),
**characterized in that** the secure element (20) has a physical Input/Output interface (60) configured to handle the component (30) and **in that** the secure element (20) is directly connected to the component (30) through a wired link (WL) configured so that the controller (10) can access the component (30) only through the secure element (20).

2. A device (40) according to claim 1, wherein the wired link (WL) is a bus.

3. A device (40) according to claim 1, wherein the wired link (WL) is a point-to-point connection.

4. A device (40) according to claim 1, wherein the component (30) is a smart sensor.

5. A device (40) according to claim 1, wherein the component (30) is an actuator adapted to activate and to block a service.

6. A **method** for transmitting a message (MG) to a component (30) selected from a set including sensors and actuators, said component (30) being included in a device (40) comprising a controller (10) and a secure element (20) which includes both resources and an operating system configured to deny access to said resources to an entity which is not entitled, said controller (10) being able to communicate with the secure element (20) and to receive a request (RQ) to send the message (MG) to the component (30), said request (RQ) being initiated by an external device (50),
**characterized in that** the method comprises the steps:
- the controller (10) forwards the request (RQ) to the secure element (20),
- the secure element (20) checks the genuineness of the request (RQ),
- the secure element (20) sends the message (MG) directly to the component (30) in case of successful checking only.

7. A method according to claim 6, wherein the step of checking the genuineness of the request (RQ) includes authentication of the external device (50) and checking of integrity of the request (RQ).

8. A method according to claim 6, wherein the component (30) is an actuator and the message (MG) is a command.

9. A method according to claim 6, wherein the component (30) is a sensor and the message (MG) is a request to retrieve a value provided by the sensor.

10. A method according to claim 9, wherein said value is securely sent to the external device (50) via the controller (10) using a security layer provided by the secure element (20).
